# EUROPEAN PATENT APPLICATION

(11) **EP 4 213 279 A1**
(43) Date of publication of application: **19.07.2023**
(21) Application number: 20952702.7
(22) Date of filing: 08.09.2020
(51) Int. Cl.: H01M 50/112, H01M 50/538

(54) **ELECTROCHEMICAL DEVICE AND ELECTRONIC DEVICE**

(71) Applicant: Ningde Amperex Technology Limited, Ningde, Fujian 352100 (CN)
(72) Inventor: ZHANG, Nan, Ningde, Fujian 352100 (CN); ZHANG, Yibo, Ningde, Fujian 352100 (CN); YAN, Kun, Ningde, Fujian 352100 (CN); HU, Qiaoshu, Ningde, Fujian 352100 (CN)
(74) Representative: Klunker IP Patentanwälte PartG mbB
(86) International application number: PCT/CN2020/114083
(87) International publication number: WO 2022/051914

(57) **Abstract**

This application provides an electrochemical apparatus and an electronic apparatus, where the electrochemical apparatus includes at least two electrode assemblies and a packaging shell, where the electrode assemblies are respectively disposed in independent cavities in the packaging shell; each electrode assembly includes two tabs with opposite polarities, where at least one tab of one electrode assembly is connected to one of two tabs of the other electrode assembly, and there is a tab overlapping region between orthographic projections of the two connected tabs along a seal thickness direction Z; and a ratio α of overlapping width of the two connected tabs along a seal length direction X at an outer edge of a seal of the packaging shell viewed along the seal thickness direction Z to width of either of the two connected tabs satisfies 40%<α≤100%. The electrochemical apparatus provided in this application not only implements high-voltage output, but also improves packaging reliability of a tab region during the high-voltage output.

## Description

### TECHNICAL FIELD

This application relates to the electrochemical field, and in particular, to an electrochemical apparatus and an electronic apparatus using the electrochemical apparatus.

### BACKGROUND

By virtue of advantages such as large volumetric and mass energy density, long cycle life, a low self-discharge rate, a small volume, and light weight, lithium-ion batteries are widely applied in the field of consumer electronics. With rapid development of electric vehicles and portable electronic devices in recent years, people have increasingly high related requirements for energy density, safety, cycling performance, and the like of batteries, expecting new lithium-ion batteries with comprehensively improved performance.

### SUMMARY

This application aims to provide an electrochemical apparatus and an electronic apparatus, to implement high-voltage output and improve welding reliability of two series-parallel tabs and packaging reliability of a tab region.

A first aspect of this application provides an electrochemical apparatus, including at least two electrode assemblies and a packaging shell, where the electrode assemblies are respectively disposed in independent cavities in the packaging shell;
each electrode assembly includes two tabs with opposite polarities, where at least one tab of one electrode assembly is connected to one of two tabs of the other electrode assembly, and there is a tab overlapping region between orthographic projections of the two connected tabs along a seal thickness direction Z; and
a ratio α of overlapping width O1 of the two connected tabs to width W1 of either of the two connected tabs satisfies 40%<α≤100%, where
the overlapping width O1 is overlapping width of the two connected tabs along a seal length direction X at an outer edge of a seal of the packaging shell viewed along the seal thickness direction Z; and
the width W1 of the tab is width of either of the two connected tabs along the seal length direction X at the outer edge of the seal of the packaging shell viewed along the seal thickness direction Z.

In some embodiments of the first aspect of this application, each of the two connected tabs is provided with a tab adhesive, tab adhesive application width of the tab along the seal length direction X at the outer edge of the seal of the packaging shell extends beyond two sides of the tab, and a ratio of shoulder width D2 of the tab adhesive to the width W 1 of the tab is D2/W1≥1/60, where
the shoulder width D2 of the tab adhesive is a distance by which a side of the tab adhesive exceeds an edge of the tab on a same side along the direction X at the outer edge of the seal of the packaging shell.

In some embodiments of the first aspect of this application, there is a tab adhesive overlapping region between orthographic projections of the tab adhesives on the two connected tabs along the seal thickness direction Z, and a ratio β of overlapping width O2 of the tab adhesives to width W2 of either of the tab adhesives satisfies 40%<β≤100%, where
the overlapping width O2 of the tab adhesives is overlapping width of the tab adhesives along the seal length direction X at the outer edge of the seal of the packaging shell viewed along the seal thickness direction Z; and
the width W2 of the tab adhesive is width of either of the tab adhesives along the seal length direction X at the outer edge of the seal of the packaging shell viewed along the seal thickness direction Z.

In some embodiments of the first aspect of this application, a distance between the two connected tabs at the outer edge of the seal of the packaging shell is D5; and there is a connecting region between the two connected tabs, tab length between the connecting region and the outer edge of the seal of the packaging shell is D6, and a relationship between D5 and D6 satisfies 0<D5/D6≤1.7.

In some embodiments of the first aspect of this application, 3 mm≤D6≤30 mm.

In some embodiments of the first aspect of this application, 0.1 mm<D5<(H1+H2)/2+5 mm, where H1 and H2 are respective thickness of the two adjacent electrode assemblies, and H1 and H2 may be equal or unequal.

In some embodiments of the first aspect of this application, an area S1 of the connecting region ranges from 1 mm²/g to 200 mm²/g.

In some embodiments of the first aspect of this application, in a direction leaving the electrode assembly, a distance D1 by which the tab adhesive exceeds an upper edge of the packaging shell along a seal width direction Y satisfies 0.2 mm≤D1≤5 mm, thickness of the tab adhesive satisfies 0.1 mm≤D3≤3 mm, and thickness of the tab satisfies 0.2 mm≤D4≤5 mm.

In some embodiments of the first aspect of this application, 50%≤α≤100%.

In some embodiments of the first aspect of this application, the two connected tabs are two tabs with opposite polarities.

In some embodiments of the first aspect of this application, the electrode assembly has tabs protruding from the packaging shell in different directions.

In some embodiments of the first aspect of this application, the electrochemical apparatus further includes a partition plate sandwiched between electrode assemblies, where thickness of the partition plate ranges from 2 µm to 100 µm.

In some embodiments of the first aspect of this application, a structure of the electrode assembly includes at least one of a winding structure and a stacked structure.

In some embodiments of the first aspect of this application, the packaging shell includes at least one of an aluminum-plastic film, an aluminum shell, a steel shell, or a plastic shell.

A second aspect of this application provides an electronic apparatus, including the electrochemical apparatus according to the first aspect of this application.

The electrochemical apparatus provided in this application implements high-voltage output through internal series connection of multiple electrode assemblies, and also has functions of reducing total heat production and temperature rise of the electrochemical apparatus. Different electrode assemblies are placed in independent cavities separately to avoid internal short circuit of the electrode assembly in a liquid electrolyte environment and electrolyte decomposition under a high voltage, thereby improving safety performance of the electrochemical apparatus. Effective connection between the tabs of the adjacent electrode assemblies improves connecting reliability, ensures effective power output and current flow capacity of the high-voltage electrochemical apparatus, reduces power consumption caused due to the heat production of the tabs, also prevents the tab adhesive from softening or melting caused due to the heat production of the tabs, and improves the packaging reliability of the electrochemical apparatus. Extending the tabs out from the packaging shell, designing and adjustment of the relative positions of the tabs, and consistency designing of the tabs further improves the packaging reliability of the electrochemical apparatus with the high output voltage.

### BRIEF DESCRIPTION OF DRAWINGS

To describe the technical solutions in embodiments of this application and in the prior art more clearly, the following briefly describes the accompanying drawings required for describing the embodiments and the prior art. Apparently, the accompanying drawings in the following description show merely some of the embodiments of this application, and persons of ordinary skill in the art may still derive other drawings from these accompanying drawings without creative efforts.
FIG. 1 is a schematic structural diagram of an electrochemical apparatus according to an embodiment of this application;
FIG. 2 is a schematic structural diagram of an electrochemical apparatus according to another embodiment of this application;
FIG. 3 is a schematic structural diagram of an electrochemical apparatus according to still another embodiment of this application;
FIG. 4 is a partial schematic structural diagram of a left view of FIG. 2;
FIG. 5 is another partial schematic structural diagram of the left view of FIG. 2; and
FIG. 6 is still another partial schematic structural diagram of the left view of FIG. 2.

### DESCRIPTION OF EMBODIMENTS

To make the objectives, technical solutions, and advantages of this application more comprehensible, the following describes this application in detail with reference to accompanying drawings and embodiments. Apparently, the described embodiments are merely some but not all of the embodiments of this application.

The electrochemical apparatus in this application may be any electrochemical apparatus known to persons skilled in the art, for example, a lithium-ion battery, a sodium-ion battery, a magnesium-ion battery, or a supercapacitor. The lithium-ion battery is used as an example below for description. Persons skilled in the art should understand that the following description is only used as an example for illustration and does not limit the protection scope of this application.

This application provides an electrochemical apparatus, including at least two electrode assemblies and a packaging shell, where the electrode assemblies are respectively disposed in independent cavities in the packaging shell;
each electrode assembly includes two tabs with opposite polarities, where at least one tab of one electrode assembly is connected to one of two tabs of the other electrode assembly, and there is a tab overlapping region between orthographic projections of the two connected tabs along a seal thickness direction Z; and
a ratio α of overlapping width O1 of the two connected tabs to width W1 of either of the two connected tabs satisfies 40%<α≤100%, where
the overlapping width O1 is overlapping width of the two connected tabs along a seal length direction X at an outer edge of a seal of the packaging shell viewed along the seal thickness direction Z; and
the width W1 of the tab is width of either of the two connected tabs along the seal length direction X at the outer edge of the seal of the packaging shell viewed along the seal thickness direction Z.

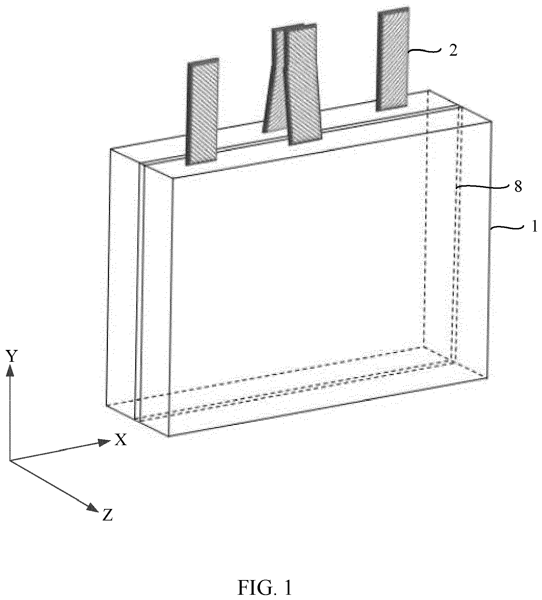

FIG. 1 shows an embodiment of this application, a three-dimensional coordinate system is established by using a seal length direction, a seal width direction, and a seal thickness direction, a direction X represents the seal length direction, a direction Y represents the seal width direction, and a direction Z represents the seal thickness direction. The electrochemical apparatus includes electrode assemblies and a packaging shell 1, and the electrode assemblies are disposed in independent cavities in the packaging shell 1. For example, the first electrode assembly and the second electrode assembly are disposed in independent cavities in the packaging shell 1 and separated by a partition plate 8, and each electrode assembly includes two tabs 2 with opposite polarities, where at least one tab 2 of one electrode assembly is connected to one of two tabs of the other electrode assembly, and there is a tab overlapping region between orthographic projections of the two connected tabs 2 along the seal thickness direction Z.

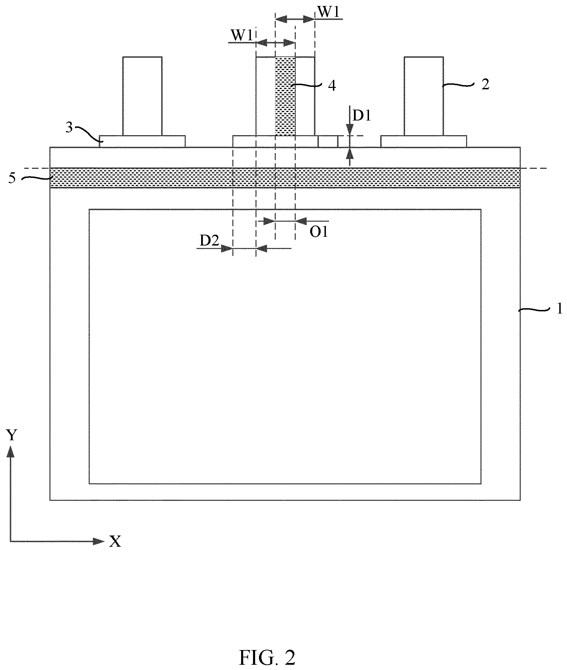

Referring to FIG. 2, there is a seal region 5 on the packaging shell 1, a dotted line parallel to the direction X in the seal region 5 marks the outer edge of the seal in this application, and it can be learned that the outer edge of the seal is an upper boundary of the seal region 5; and each electrode assembly has two tabs with opposite polarities, where one tab 2 is connected to one of two tabs of the other electrode assembly, and there is a tab overlapping region 4 between orthographic projections along the seal thickness direction Z. The overlapping width of the two connected tabs along a seal length direction X at an outer edge of a seal of the packaging shell 1 viewed along the seal thickness direction Z is O1; and width of either of the two connected tabs along the seal length direction X at the outer edge of the seal of the packaging shell 1 viewed along the seal thickness direction Z is W 1. A ratio α of O1 to W1 satisfies 40%<α≤100%.

In the electrochemical apparatus in this application, each electrode assembly can include a positive tab and a negative tab, and adjacent electrode assemblies can be connected through the positive tab and the negative tab, thereby connecting the adjacent electrode assemblies in series. The tab overlapping region affects transmission of electric energy between the adjacent electrode assemblies, not limited to any theory, the smaller the overlapping width, the lower the packaging reliability of the two connected tabs, which further affects packaging reliability of the two adjacent electrode assemblies. In the electrochemical apparatus in this application, the ratio α of the width O1 of the tab overlapping region of the two connected tabs to the width W1 of either of the two connected tabs satisfies 40%<α≤100%, and preferably 50%≤α≤100%. This not only can ensure effective power output and current flow capacity of a high-voltage electrochemical apparatus, but also can ensure the packaging reliability of the adjacent electrode assemblies.

In some embodiments of this application, each of the two connected tabs is provided with a tab adhesive, tab adhesive application width of the tab along the seal length direction X at the outer edge of the seal of the packaging shell extends beyond two sides of the tab, and a ratio of shoulder width D2 of the tab adhesive to the width W1 of the tab is D2/W1≥1/60. As shown in FIG. 2, in this application, the shoulder width D2 of the tab adhesive is a distance by which a side of the tab adhesive exceeds an edge of the tab on a same side along the direction X at the outer edge of the seal of the packaging shell. The tab adhesives on the two sides can have same or different shoulder width. Keeping the ratio of D2 to W1 within the foregoing range can ensure the packaging reliability of the electrochemical apparatus.

In some embodiments of this application, width W1 of the tab satisfies 2 mm≤W1≤60 mm. The width W1 of the tab directly affects an area of the tab overlapping region, and keeping the width W1 of the tab within the foregoing range can effectively improve the connecting reliability of the adjacent electrode assemblies.

In some embodiments of this application, there is a tab adhesive overlapping region between orthographic projections of the tab adhesives on the two connected tabs along the seal thickness direction Z, and a ratio β of overlapping width O2 of the tab adhesives to width W2 of either of the tab adhesives satisfies 40%<β≤100%, where
the overlapping width O2 of the tab adhesives is overlapping width of the tab adhesives along the seal length direction X at the outer edge of the seal of the packaging shell viewed along the seal thickness direction Z; and
the width W2 of the tab adhesive is width of either of the tab adhesives along the seal length direction X at the outer edge of the seal of the packaging shell viewed along the seal thickness direction Z.

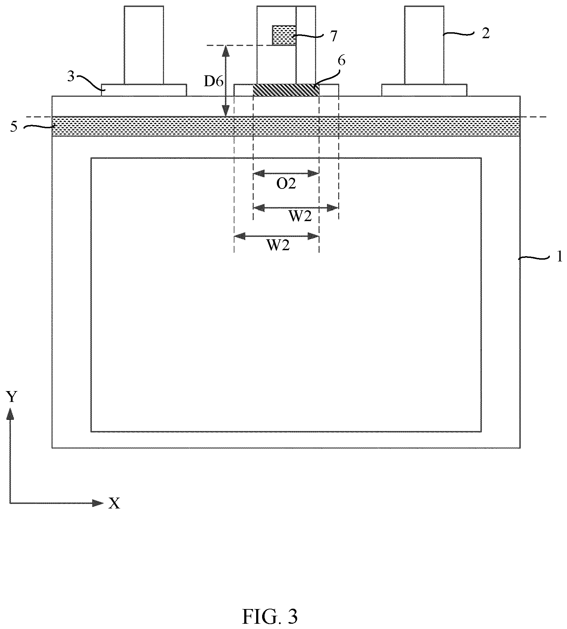

FIG. 3 shows an embodiment of this application, there is a tab adhesive overlapping region 6 between tab adhesives 3 on the two connected tabs, and a ratio β of width O2 of the tab adhesive overlapping region 6 at the outer edge of the seal of the packaging shell 1 along the seal length direction X to width W2 of either of the tab adhesives at the outer edge of the seal of the packaging shell 1 satisfies 40%<β≤100%. The tab adhesive overlapping region 6 also affects packaging reliability of the two connected tabs. When the tab adhesive overlapping region 6 has smaller width, the electrochemical apparatus is bent under external force, strain of the tab is likely to be generated toward a plane perpendicular to the tab at a junction of the two connected tabs, and stress is likely to be generated at the junction, thereby causing cracks likely and reducing the packaging reliability of the two connected tabs. Keeping the ratio of the width of the tab adhesive overlapping region 6 to the width of either of the tab adhesives within the foregoing ratio range can further improve the packaging reliability of the adjacent electrode assemblies.

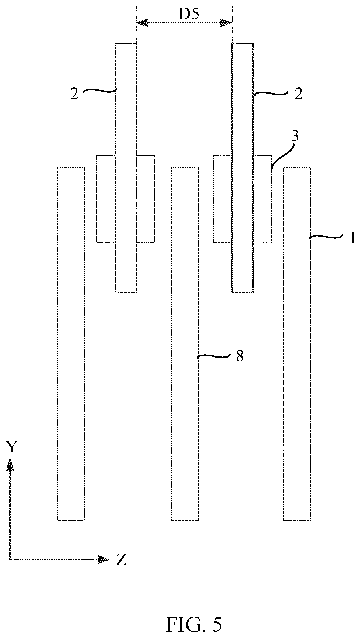

In some embodiments of this application, referring to FIG. 3 and FIG. 5, a distance between the two connected tabs at the outer edge of the seal of the packaging shell 1 is D5; and there is a connecting region 7 between the two connected tabs, tab length between the connecting region 7 and the outer edge of the seal of the packaging shell 1 is D6, and a relationship between D5 and D6 satisfies 0<D5/D6≤1.7, and preferably 3×10⁻³<D5/D6≤1.5.

In some embodiments of this application, 0.1 mm<D5<(H1+H2)/2+5 mm. The distance D5 between the two connected tabs refers to a distance between the two connected tabs at the outer edge of the seal of the packaging shell, H1 and H2 are respective thickness of two adjacent electrode assemblies respectively, H1 and H2 may be equal or unequal. An excessively large distance between the two tabs not only makes it more difficult to connect the two tabs, but also reduces connecting reliability between the two connected tabs. Therefore, designing and regulating relative positions of the two connected tabs can improve the connecting reliability of the adjacent electrode assemblies. The distance between the two connected tabs in this application refers to a distance between the two tabs along the seal thickness direction Z at the outer edge of the seal of the tab and the packaging shell.

FIG. 3 shows an embodiment of this application. There is the connecting region 7 between the two connected tabs, and D6 refers to the tab length between a lower edge of the connecting region 7 and the outer edge of the seal of the packaging shell 1. When a ratio of D5/D6 is small, D6 is large, that is, the connecting region 7 is far away from the electrode assembly, and is more distant from the electrode assembly. When the electrochemical apparatus is under external force, a tab 2 with sufficient length is available for relieving stress, to reduce stress applied to the seal and the joint at the end, thereby improving seal reliability and connecting reliability between the two adjacent electrode assemblies. When the ratio of D5/D6 is large, D5 is large, that is, the distance between the two connected tabs is excessively large. When the electrochemical apparatus is under external force, tearing by the tab 2 damages the seal region to some extent, thereby affecting packaging reliability of the electrochemical apparatus and stability of the connecting region 7. However, in the electrochemical apparatus provided in this application, the ratio of D5/D6 falls within the foregoing range, which can not only improve the connecting reliability between the two adjacent electrode assemblies, but also improve the packaging reliability of the electrochemical apparatus.

In some embodiments of this application, 3mm≤D6≤30 mm. When D6 is small, the tab adhesive on the tab is likely to be damaged when the two tabs are connected, which affects the packaging reliability of the electrochemical apparatus and makes it difficult to perform a connection operation; secondly, because the connecting region is close to the packaging shell, cracks are prone to occur under the external force, thereby reducing connecting reliability of the two adjacent electrode assemblies; thirdly, the connecting region is close to the packaging shell, and because the electrode assembly has specific thickness, connecting strength of the connecting region is affected, thereby reducing connecting reliability of the two adjacent electrode assemblies; and when connection is not tight enough due to the low connecting strength of the connecting region, resistance of the connecting region is increased during use of the electrode assembly, and as a result, temperature rise of the tab is increased during charging and the tab adhesive softens or melts, thereby reducing the packaging reliability of the electrochemical apparatus. When D6 is large and the electrochemical apparatus is under the external force, the connecting region is more likely to be damaged, thereby reducing connecting reliability of the two adjacent electrode assemblies. In addition, when D6 is larger, the connecting region increases a volume of the electrochemical apparatus, and because the connecting region is a region with an inactive substance, no energy is provided, thereby reducing volumetric energy density of the electrochemical apparatus. Therefore, when D6 is within the foregoing range, the resulting electrochemical apparatus has excellent packaging reliability and use reliability.

In some embodiments of this application, an area S1 of the connecting region ranges from 1 mm² to 200 mm². The area S1 of the connecting region is less than or equal to an area of the tab overlapping region, that is, tab overlapping regions can be completely connected, or the tab overlapping regions can be partially connected, provided that connecting reliability of the two tabs is sufficient for achieving the objective of this application. When the area of the connecting region is excessively small, the connecting reliability of the two connected tabs is reduced, and a current carrying capacity of the connecting region is reduced. Keeping the area of the connecting region within a range provided in this application can effectively ensure the connecting reliability of the adjacent electrode assemblies and normal operation of the electrochemical apparatus. The greater the area S1 of the connecting region, the greater the current carrying capacity, thereby ensuring the effective power output and the current flow capacity of the high-voltage electrochemical apparatus. In addition, increasing the area S 1 of the connecting region can also reduce power consumption caused due to heat production of the tabs, thereby preventing the tab adhesive from softening or melting caused due to the heat production of the tabs and improving the packaging reliability of the electrochemical apparatus.

In addition, when the area S 1 of the connecting region remains unchanged, if the width of the tab overlapping region is reduced, the width of the connecting region along the seal length direction X is reduced, the connecting strength of the connecting region is reduced, and the connecting reliability of the adjacent electrode assemblies is also reduced.

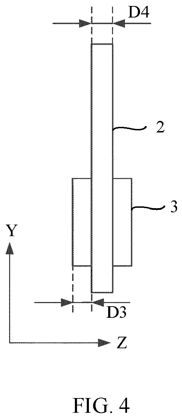

In some embodiments of this application, in a direction of leaving the electrode assembly, a distance D1 by which the tab adhesive 3 exceeds an upper edge of the packaging shell along the seal width direction Y satisfies 0.2 mm≤D1≤5 mm, and shoulder width of the tab adhesive 3 satisfies 1 mm≤D2≤8 mm. As shown in FIG. 4, thickness of the tab adhesive 3 satisfies 0.1 mm≤D3≤3 mm, and thickness of the tab 2 satisfies 0.2 mm≤D4≤5 mm. When D1 to D4 are within the foregoing range, the resulting electrochemical apparatus has good packaging reliability and use reliability, and the adjacent electrode assemblies have good connecting reliability.

In this application, the tab adhesive provided on the tab can bond with the packaging shell, and such bonding may be sealed connection between the tab and the packaging shell via the tab adhesive.

In some embodiments of this application, the two tabs of each electrode assembly can protrude from the packaging shell in a same direction or different directions. The two tabs may protrude from one side of the packaging shell, or protrude from any two sides of the packaging shell respectively.

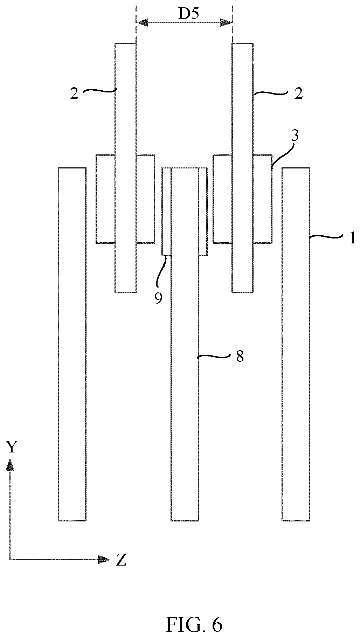

As shown in FIG. 5, in some embodiments of this application, the electrochemical apparatus may further include a partition plate 8 between the electrode assemblies, the cavities are on two sides of the partition plate 8, and each electrode assembly may be disposed in independent cavities. Herein, the thickness of the partition plate ranges from 2 µm to 100 µm, preferably 5 µm to 50 µm, and more preferably 10 µm to 30 µm. In the electrochemical apparatus, the partition plate has both a characteristic of ion insulation and specific mechanical strength. Therefore, if the partition plate is excessively thin, the mechanical strength is poor, which likely causes damage and affects performance and even safety of the electrochemical apparatus. An excessively thick partition plate increases weight of the electrochemical apparatus, which limits performance of the electrochemical apparatus. As shown in FIG. 6, in some other embodiments of this application, to effectively bond the tab adhesive 3 to the partition plate 8, the partition plate 8 further includes a bonding material 9.

In some embodiments of this application, a structure of the electrode assembly includes at least one of a winding structure and a stacked structure.

In some embodiments of this application, the cavity is a sealed cavity. The sealed cavity is obtained by tightly connecting the partition plate to the packaging shell, to form independent cavities on two sides of the partition plate, and the electrode assembly and the electrolyte on the two sides of the partition plate are completely separated, which can ensure normal operation of the electrode assemblies on the two sides. In addition, good sealing helps improve safety and environmental stability of the electrochemical apparatus.

A connection manner of the two connected tabs is not particularly limited in this application, provided that the objective of this application can be achieved. For example, a welding connection may be used. The foregoing welding connection manner is not particularly limited, provided that the objective of this application can be achieved. For example, laser welding, ultrasonic welding, or resistance welding may be used.

In this application, when the two connected tabs are connected by welding, an area of the connecting region is an area of a region encircled by outermost spot welds, and the spot welds are distributed in the connecting region.

The electrode assembly described in this application may be an electrode assembly including a positive electrode plate, a negative electrode plate and a separator, and the foregoing electrode assembly is used as an example for description. Persons skilled in the art should understand that the following description is only used as an example for illustration and does not limit the protection scope of this application.

The thickness of the electrode assembly is not particularly limited in this application, provided that the objective of this application can be achieved. For example, the thickness of the electrode assembly is 3 mm.

The positive electrode plate is not particularly limited in some embodiments of this application, provided that the objective of this application can be achieved. For example, the positive electrode plate generally includes a positive electrode current collector and a positive electrode active material. In this application, the positive electrode current collector is not particularly limited, and may be any positive electrode current collector known in the art, such as copper foil, aluminum foil, aluminum alloy foil, and a composite current collector. The positive electrode active material is not particularly limited, and may be any positive electrode active material in the prior art. For example, the positive electrode active material includes at least one of lithium nickel cobalt manganese oxide, lithium nickel cobalt aluminum oxide, lithium iron phosphate, lithium cobalt oxide, lithium manganese oxide, or lithium manganese iron phosphate. In this application, thickness of the positive electrode current collector and the positive electrode active material is not particularly limited, provided that the objective of this application can be achieved. For example, the thickness of the positive electrode current collector ranges from 8 µm to 12 µm, and the thickness of the positive electrode active material ranges from 30 µm to 120 µm.

In some preferred embodiments of this application, the positive electrode plate may further include a conductive layer. The conductive layer is sandwiched between the positive electrode current collector and the positive electrode active material layer. Composition of the conductive layer is not particularly limited, and the conductive layer may be a conductive layer commonly used in the art. The conductive layer includes a conductive agent and a binder.

The negative electrode plate is not particularly limited in some embodiments of this application, provided that the objective of this application can be achieved. For example, the negative electrode plate generally includes a negative electrode current collector and a negative electrode active material. In this application, the negative electrode current collector is not particularly limited, and any negative electrode current collector known in the art can be used, such as copper foil, aluminum foil, aluminum alloy foil, and a composite current collector. The negative electrode active material is not particularly limited, and any negative electrode active material known in the art may be used. For example, the negative electrode active material may include at least one of artificial graphite, natural graphite, Meso-carbon Microbeads, silicon, silicon carbon, silicon oxide, soft carbon, hard carbon, lithium titanate, or titanoniobate. In this application, thickness of the negative electrode current collector and the negative electrode active material is not particularly limited, provided that the objective of this application can be achieved. For example, the thickness of the negative electrode current collector ranges from 6 µm to 10 µm, and the thickness of the negative electrode active material ranges from 30 µm to 120 µm.

In some preferred embodiments of this application, the negative electrode plate may further include a conductive layer. The conductive layer is sandwiched between the negative electrode current collector and the negative electrode active material layer. Composition of the conductive layer is not particularly limited, and the conductive layer may be a conductive layer commonly used in the art. The conductive layer includes a conductive agent and a binder.

The conductive agent is not particularly limited, and any conductive agent known in the art can be used provided that the objective of this application can be achieved. For example, the conductive agent may include at least one of conductive carbon black (Super P), carbon nanotubes (CNTs), a carbon fiber, graphene, and the like. The binder is not particularly limited, and any binder known in the art can be used provided that the objective of this application can be achieved. For example, the binder may include at least one of styrene-butadiene rubber (SBR), polyvinyl alcohol (PVA), polytetrafluoroethylene (PTFE), or sodium carboxymethyl cellulose (CMC-Na).

The separator is not particularly limited in some embodiments of this application, provided that the objective of this application can be achieved. For example, thickness of the separator may range from 5 µm to 15 µm, the separator may include a polymer or an inorganic substance formed by a material stable to the electrolyte in this application. In this application, the separator may also be referred to as a separating film.

For example, the separator may include a substrate layer and a surface treatment layer. The substrate layer may be a non-woven fabric, film, or composite film of a porous structure. The substrate layer may be made of at least one of polyethylene, polypropylene, polyethylene terephthalate, and polyimide. Optionally, a polypropylene porous membrane, a polyethylene porous membrane, polypropylene nonwoven fabric, polyethylene nonwoven fabric, or polypropylene-polyethylene-polypropylene porous composite membrane can be used. Optionally, the surface treatment layer is provided on at least one surface of the substrate layer, and the surface treatment layer may be a polymer layer or an inorganic substance layer, or a layer formed by a mixture of a polymer and an inorganic substance.

For example, the inorganic layer includes inorganic particles and a binder. The inorganic particles are not particularly limited, and may be selected from, for example, at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is not particularly limited, and may be selected from, for example, a combination of one or more of polyvinylidene fluoride, vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, and polyhexafluoropropylene. The polymer layer includes a polymer, and a material of the polymer includes at least one of polyamide, polyacrylonitrile, acrylate polymer, polyacrylic acid, polyacrylate, polyvinylpyrrolidone, polyvinyl ether, polyvinylidene fluoride, or poly(vinylidene fluoride-hexafluoropropylene).

The tab described in this application refers to a metal conductor extending from the positive electrode plate or the negative electrode plate, and is configured to connect another part of the electrochemical apparatus in series or in parallel. The positive tab extends from the positive electrode plate, and the negative tab extends from the negative electrode plate.

A material of the tab adhesive is not particularly limited in this application, and any tab adhesive known in the art can be used provided that the objective of this application can be achieved. For example, the material of the tab adhesive can include at least one of polypropylene (PP), polyethylene terephthalate (PET) or polyethylene naphthalate (PEN), and can also include a composite material including the foregoing polymer, for example, a PP/PET/PP composite material, a PP/PEN/PP composite material, a PP/non-woven fabric/PP composite material, or a PP/high-temperature-resistant fire-retardant layer/PP composite material. The width of the tab adhesive is not particularly limited, provided that the objective of this application can be achieved. For example, the width of the tab adhesive ranges from 4 mm to 76 mm. The non-woven fabric is not particularly limited, provided that the objective of this application can be achieved, for example, polypropylene non-woven fabric or polyethylene non-woven fabric. The high-temperature-resistant fire-retardant layer is not particularly limited, provided that the objective of this application can be achieved, for example, an aramid layer.

The partition plate is not particularly limited in this application, and any partition plate known in the art can be used provided that the objective of this application can be achieved. Generally, the partition plate needs to be ionically insulating to avoid high-voltage decomposition of the electrolyte and a short circuit within the electrode assembly. For example, the material of the partition plate includes at least one of a polymer material, a metal material, a carbon material or a composite material thereof.

The polymer material is not particularly limited, provided that this application can be implemented. Any material known to persons skilled in the art may be used. For example, the polymer material may include at least one of polyethylene terephthalate, polybutylene terephthalate, polyethylene naphthalate, polyether ether ketone, polyimide, polyamide, polyethylene glycol, polyamide-imide, polycarbonate, cyclic polyolefin, polyphenylene sulfide, polyvinyl acetate, polytetrafluoroethylene, polymethylene naphthalene, polyvinylidene fluoride, polyethylene naphthalate, polypropylene carbonate, poly(vinylidene fluoride-hexafluoropropylene), poly(vinylidene fluoride-co-chlorotrifluoroethylene), organosilicone, vinylon, polypropylene, acid anhydride modified polypropylene, polyethylene, ethylene-vinyl acetate copolymer, ethylene-ethyl acrylate copolymer, ethylene-acrylic acid copolymer, ethylene-vinyl alcohol copolymer, polyvinyl chloride, polystyrene, polyether nitrile, polyurethane, polyphenylene ether, polyester, polysulfone, amorphous α-olefin copolymer, or a derivative thereof.

The metal material is not particularly limited, and any material known to persons skilled in the art may be used, provided that the objective of this application can be achieved. The metal material may include, for example, at least one of Ni, Ti, Cu, Ag, Au, Pt, Fe, Co, Cr, W, Mo, Al, Mg, K, Na, Ca, Sr, Ba, Si, Ge, Sb, Pb, In, Zn, stainless steel and a composition or alloy thereof. Preferably, the metal material can be selected from a metal material with better redox resistance in the lithium-ion battery environment.

The carbon material includes at least one of carbon felt, a carbon film, carbon black, acetylene black, fullerene, a conductive graphite film, or a graphene film. In some embodiments of this application, the polymer material is preferably used for an ion insulation layer, and because density of the polymer material is low, weight of an inactive substance can be reduced, thereby increasing mass energy density of an electrode assembly. In addition, the polymer material is used for the ion insulation layer, a probability of generating debris under mechanical abuse (nail penetration, impact, extrusion, and the like) is lower, and a wrapping effect is better for a mechanically damaged surface. Therefore, a safety margin can be improved in the case of the mechanical abuse, and a pass rate for a safety test is increased.

In some embodiments of this application, the partition plate further includes a packaging layer, the packaging layer may be disposed on both sides of the ion insulation layer, or the packaging layer is disposed at peripheral edges of a surface of the ion insulation layer or the entire surface thereof, and the packaging layer is used for sealed connection of the ionic insulation layer and the packaging shell.

In this application, the material of the packaging layer is not particularly limited, provided that the objective of this application can be achieved. A material known to persons skilled in the art may be used. For example, the material of the packaging layer includes at least one of polypropylene, acid anhydride modified polypropylene, polyethylene, ethylene-vinyl acetate copolymer, ethylene-ethyl acrylate copolymer, ethylene-acrylic acid copolymer, ethylene-vinyl alcohol copolymer, polyvinyl chloride, polystyrene, polyether nitrile, polyurethane, polyamide, polyester, amorphous α-olefin copolymer, or a derivative thereof.

Certainly, when covering the entire surface of the ion insulation layer, the packaging layer in this application also has a function of ion insulation. In this application, for ease of description, the partition plate is divided into an ion insulation layer and a packaging layer, but this does not indicate that the packaging layer has no function of ion insulation. For example, when both sides of the ion insulation layer are completely covered with the packaging layer, the ion insulation layer and the packaging layer jointly implement ion insulation.

In this application, the bonding material between the partition plate and the tab adhesive is not particularly limited, provided that the objective of this application can be achieved. A material known to persons skilled in the art may be used. For example, the bonding material includes at least one of polypropylene, polyester, 4-hydroxybenzaldehyde, polyamide, polyphenylene ether, or polyurethane.

The electrolyte described in this application may include lithium salt and a non-aqueous solvent. In this application, the lithium salt is not particularly limited, and any lithium salt known in the art may be used, provided that the objective of this application can be achieved. For example, the lithium salt may include at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, or LiPO₂F₂. For example, LiPF₆ may be used as the lithium salt. In this application, the non-aqueous solvent is not particularly limited, provided that the objective of this application can be achieved. For example, the non-aqueous solvent may include at least one of a carbonate compound, a carboxylate compound, an ether compound, a nitrile compound, or another organic solvent.

For example, the carbonate compound may include at least one of diethyl carbonate (DEC), dimethyl carbonate (DMC), dipropyl carbonate (DPC), methyl propyl carbonate (MPC), ethyl propyl carbonate (EPC), ethyl methyl carbonate (MEC), ethylene carbonate (EC), propylene carbonate (PC), butylene carbonate (BC), vinyl ethylene carbonate (VEC), fluoroethylene carbonate (FEC), 4,5-difluoro-1,3-dioxolan-2-one, 4,4-difluoro-1,3-dioxolan-2-one, 4,4,5-trifluoro-1,3-dioxolan-2-one, 4,4,5,5-tetrafluoro-1,3-dioxolan-2-one, 4-fluoro-5-methyl-1,3 -dioxolan-2-one, 4-fluoro-4-methyl-1,3-dioxolan-2-one, 4,5-difluoro-4-methyl-1,3-dioxolan-2-one, 4,4,5-trifluoro-5-methyl-1,3-dioxolan-2-one, or 4-trifluoroMethyl ethylence carbonate.

The packaging shell is not particularly limited in this application, provided that the objective of this application can be achieved. The packaging shell includes at least one of an aluminum-plastic film, an aluminum shell, a steel shell, or a plastic shell. For example, the packaging shell may include an inner layer and an outer layer, the inner layer is hermetically connected to the partition plate, and therefore, the material of the inner layer may include the polymer material, thereby achieving a good sealing effect. In addition, bonding of the inner layer and the outer layer can effectively protect an internal structure of the electrochemical apparatus. The material of the inner layer is not particularly limited in this application, provided that the objective of this application can be achieved. For example, the material of the inner layer includes at least one of polypropylene, polyester, 4-hydroxybenzaldehyde, polyamide, polyphenylene ether, or polyurethane. The material of the outer layer is not particularly limited in this application, provided that the objective of this application can be achieved. For example, the material of the outer layer includes at least one of aluminum foil, an aluminum oxide layer, or a silicon nitride layer.

Thickness of the packaging shell is not particularly limited in this application, provided that the objective of this application can be achieved. For example, the thickness of the packaging shell ranges from 60 µm to 500 µm, preferably 60 µm to 300 µm, and more preferably 60 µm to 200 µm. The packaging shell with the foregoing thickness can effectively protect the internal structure of the electrochemical apparatus.

In this application, sealing thickness T (unit: mm) and sealing width W (unit: mm) of the seal region between the partition plate and the packaging shell satisfy that 0.01<T/W<0.05. Keeping the ratio of T/W within the foregoing range can ensure good sealing of the battery, and improve service life of the battery. The sealing thickness and the sealing width are not particularly limited in this application, provided that the objective of this application can be achieved. For example, the sealing width preferably ranges from 1 mm to 7 mm.

A sealing connection manner of the partition plate and the packaging shell is not particularly limited in this application, provided that the objective of this application can be achieved. For example, the sealing manner includes one of heat pressing, gluing sealing, or welding. In this application, a heat pressing condition is not particularly limited, provided that the objective of this application can be achieved. For example, for polypropylene used as the material of the inner layer, hot pressing temperature ranges from 150°C to 220°C, and hot pressing pressure ranges from 0.1 MPa to 0.6 MPa.

In some embodiments of this application, the structure of the electrode assembly is a winding structure, and the electrode assembly includes a single tab or multiple tabs. When the electrode assembly includes the single tab, a positive tab and a negative tab extend from the positive electrode plate and the negative electrode plate respectively. When the electrode assembly includes the multiple tabs, one positive tab and one negative tab can extend from each round of positive electrode plate and negative electrode plate respectively, or one positive tab and one negative tab can extend from two or more rounds of positive electrode plates and negative electrode plates respectively, and finally, an electrode assembly with the winding structure includes multiple sets of positive tabs and negative tabs, which are then transformed into tab leads through adapting welding.

In some embodiments of this application, the structure of the electrode assembly is a stacked structure, the electrode assembly includes the multiple tabs, one positive tab and one negative tab can extend from each layer of positive electrode plate and negative electrode plate respectively, and finally, an electrode assembly with the stacked structure includes multiple sets of positive tabs and negative tabs, which are then transformed into tab leads through adapting welding.

In this application, the foregoing distances such as D1 to D6, W1, W1, O1, and O2 are all measured with a micrometer along the direction X, the direction Y, or the direction Z shown in FIG. 1, and an average of 10 measured values is a final result.

This application further provides an electronic apparatus, including the electrochemical apparatus provided in this application. The electronic apparatus in this application is not particularly limited and may be any known electronic apparatus in the prior art. For example, the display apparatus includes, but is not limited to: notebook computers, pen-input computers, mobile computers, e-book players, portable phones, portable fax machines, portable copiers, portable printers, head-mounted stereo headsets, video recorders, liquid crystal display televisions, portable cleaners, portable CD players, mini discs, transceivers, electronic notebooks, calculators, memory cards, portable recorders, radios, backup power supplies, motors, automobiles, motorcycles, assisted bicycles, bicycles, lighting apparatuses, toys, game machines, clocks, electric tools, flashlights, cameras, large household storage batteries, lithium-ion capacitors, and the like.

A method for preparing the electrochemical apparatus in this application is not particularly limited, and any method known in the art can be used. For example, in an embodiment, the following preparation method can be used in this application:
(1) Preparation of negative electrode plate: A negative electrode active material and a solvent were prepared into a slurry and stirred to uniformity. The slurry was uniformly applied on the negative electrode plate and dried to obtain a negative electrode plate with a one-sided coating. The foregoing step was repeated on another surface of the negative electrode plate to obtain a negative electrode plate with two-sided coatings. Then, the negative electrode plate was cut for use. Coating thickness of the negative electrode active material on one surface was 70 µm.
(2) Preparation of positive electrode plate: A positive electrode active material and a solvent were prepared into a slurry and stirred to uniformity. The slurry was uniformly applied on the positive electrode plate and dried to obtain a positive electrode plate with a one-sided coating. The foregoing step was repeated on another surface of the positive electrode plate to obtain a positive electrode plate with two-sided coatings. Then, the positive electrode plate was cut for use. Coating thickness of the positive electrode active material on one surface was 65 µm.
(3) Preparation of electrolyte: Lithium salt and a non-aqueous solvent were mixed and stirred to uniformity, to obtain an electrolyte including 30% of the lithium salt.
(4) Preparation of electrode assembly: The negative electrode plate, a separator, and the positive electrode plate were stacked and layers were fixed together for use. Each electrode assembly included a positive tab and a negative tab; the preceding steps were repeated to obtain multiple electrode assemblies; and a structure of the electrode assembly may be a winding structure or a stacked structure.
(5) Partition plate: Any partition plate known in the art may be used.
(6) Assembling of electrode assembly: A packaging shell was placed in an assembly jig, then the electrode assembly and the partition plate were disposed at intervals, and the packaging shell was placed adjacent to the electrode assembly, and finally sealed to obtain an assembled electrode assembly.
(7) Injection and packaging: The electrolyte was separately injected into two cavities for assembling the electrode assembly, and all tabs of the electrode assembly extended out from an aluminum-plastic film for subsequent processing.
(8) Series connection: A positive tab of one electrode assembly and a negative tab of another electrode assembly were welded together through laser welding to implement the series connection, thereby finishing battery assembly.

The electrochemical apparatus provided in this application may include two or more electrode assemblies. For a method for preparing the electrochemical apparatus including two or more electrode assemblies, refer to the foregoing method for preparing the electrochemical apparatus. The electrochemical apparatus including three or more electrode assemblies shall also fall within the protection scope defined by the claims of this application.

The terms used in this application are generally terms commonly used by persons skilled in the art. If there is any inconsistency with the commonly used terms, the terms in this application shall prevail. In this application, unless otherwise specified, "%" and "part" are based on weight.

### Test method

### Packaging strength test of series tab region:

A part of a tab seal region was removed from the electrode assembly and used as a sample 1;
the sample 1 was cut into a test strip of width L of 8 mm, and it should be ensured that the test strip completely included the entire seal region and packaging shells on both sides of the seal region were also intact, to obtain a sample 2;
a Gotech tensile machine was used to tear the packaging shells on both sides at an angle of 180°, so that two layers of packaging shells in the seal region were separated from each other; and
stable pulling force F was recorded when the foregoing two layers of packaging shells were separated, and packaging strength σ was calculated through a formula: σ=F/L.

### Test of discharge capacity after 50 charge and discharge cycles/first discharge capacity:

During testing of Comparative Example 1, at test temperature of 25±3°C, a lithium-ion battery was charged at a constant current of 0.5C to 4.2 V, then charged at a constant voltage of 4.2 V to a current of 0.05C, left standing for 10 min, and then discharged at a current of 0.5C to 3.0 V, and the first discharge capacity was recorded as Q1D. Such process was repeated 50 cycles, discharge capacity at this moment was recorded as Q50D, and therefore, a retention rate of the discharge capacity after 50 charge and discharge cycles/the first discharge capacity was calculated through a formula: η(%)=Q50D/Q1D×100%.

During testing of Comparative Examples 2 to 4 and Examples 1 to 22, at test temperature of 25±3°C, a lithium-ion battery was charged at a constant current of 0.5C to 8.4 V, then charged at a constant voltage of 8.4 V to a current of 0.05C, left standing for 10 min, and then discharged at a current of 0.5C to 6.0 V, and the first discharge capacity was recorded as Q1D. Such process was repeated 50 cycles, discharge capacity at this moment was recorded as Q50D, and therefore, a retention rate of the discharge capacity after 50 charge and discharge cycles/the first discharge capacity was calculated through a formula: η(%)=Q50D/Q1D×100%.

### Bending stability test:

A 360° bending test was performed on the two connected tabs, that is, the tabs were bent toward a surface X-Y of the electrochemical apparatus (the surface X-Y is shown in FIG. 1) by using a top seal region of the partition plate and the packaging shell as an axis, until the connected tabs were attached to the surface X-Y, which was recorded as first bending. Then, the tabs were bent reversely by 360°, until the tabs were attached to the surface X-Y on the other side of the electrochemical apparatus, which was recorded as second bending. The steps were repeated until cracks appeared at an outer edge of the seal of the tab adhesive and the packaging shell, and the corresponding number of tab bending operations at this moment was recorded.

### Output voltage test of battery:

At test temperature of 25±3°C, the lithium-ion battery was charged at a constant current of 0.5C to N×4.2 V (N was the number of electrode assemblies connected in series), then charged at a constant voltage of N×4.2 V to a current of 0.05C, and left standing for 1 hour, and an open-circuit voltage was measured, that is, an output voltage of the battery.

### Welding tension test of series tabs:

A tab part including the tab connecting region was removed from the electrode assembly and used as a test sample. It should be ensured that the sample completely included the entire connecting region, and the tabs on both sides were also intact. A small tensile machine was used to tear apart the tabs on both sides at the angle of 180°, so that the two tabs in the welding region were separated from each other; and stable tension when the foregoing two tabs were separated was recorded as the welding tension.

### Temperature rise test of tabs charged at 2C:

At test temperature of 25°C, the battery was charged at a constant current of 0.5C to 4.45 V, then charged at a constant voltage of 4.45 V to 0.025C, and left standing for 5 min. Then, the battery was discharged at 0.5C to 3.0 V, and left standing for 5 min. A multi-channel thermometer was used to measure temperature T1 of the tabs at this moment. The battery was charged at a constant current of 2C to 4.45 V, and the multi-channel thermometer was used to measure temperature T2 of the tabs at this moment. Temperature rise ΔT of the tabs charged at 2C was calculated through a formula: ΔT=T2-T1.

### Example 1

(1) Preparation of negative electrode plate: A negative electrode active material artificial graphite, a conductive agent (Super P), and styrene-butadiene rubber (SBR) were mixed at a mass ratio of 96:1.5:2.5, deionized water was added as a solvent, and stirred to obtain a uniform slurry with a solid content of 70wt%. The slurry was uniformly applied on a surface of a 10 µm thick negative electrode current collector copper foil, and dried at 110°C, to obtain a negative electrode plate with a 150 µm thick one-sided coating of a negative electrode active material layer. The foregoing step was repeated on another surface of the negative electrode plate to obtain a negative electrode plate with two-sided coatings of negative electrode active material layers. Then, the negative electrode plate was cut into a size of 41mmx61mm for use.
(2) Preparation of positive electrode plate: A positive electrode active material lithium cobalt oxide (LiCoO₂), conductive carbon black (Super P), and polyvinylidene fluoride (PVDF) were mixed in a weight ratio of 97.5:1.0:1.5, and N-methylpyrrolidone (NMP) was added as a solvent, and stirred to obtain a uniform slurry with a solid content of 75wt%. The slurry was uniformly applied on a surface of a 12 µm thick positive electrode current collector aluminum foil, and dried at 90°C, to obtain a positive electrode plate with a 100 µm thick positive electrode active material layer. The foregoing step was repeated on another surface of the positive electrode current collector aluminum foil to obtain a positive electrode plate with two-sided coatings of positive electrode active material layers. Then, the positive electrode plate was cut into a size of 38 mm×58 mm for use.
(3) Preparation of electrolyte: In an atmosphere of dry argon, first, an organic solvent ethylene carbonate (EC), ethyl methyl carbonate (EMC), and diethyl carbonate (DEC) were mixed in a mass ratio of 30:50:20 (EC:EMC:DEC), and then lithium salt lithium hexafluorophosphate (LiPF₆) was added to the organic solvent for dissolution and mixed uniformly, to obtain an electrolyte with a lithium salt concentration of 1.15 mol/L.
(4) Preparation of electrode assembly A and electrode assembly B: The separator, the negative electrode plate with two-sided coatings, the separator, and the positive electrode plate with two-sided coatings were sequentially stacked to form a stacked plate, and then four corners of the entire stacked structure were fastened for use. Each electrode assembly included a positive tab and a negative tab, the positive tab was aluminum (Al) and the negative tab was nickel (Ni), the two tabs were arranged abreast, thickness D4 of the tab was 0.3 mm, width W1 of the tab was 5 mm, and a 15 µm thick polyethylene (PE) film was selected as the separator.
(5) Preparation of partition plate: A material of the packaging layer polypropylene (PP, melting point: 140°C) was uniformly dispersed into a dispersant N-methylpyrrolidone (NMP) to prepare a PP suspension; a spreading machine was used to apply the PP suspension on both sides of a 15 µm thick polyimide (PI) film separately; and then the polyimide film was dried at 130°C to eliminate the dispersant NMP from the suspension, thereby finishing preparation of the partition plate. Herein, thickness of the partition plate was 15 µm.
(6) Assembling of electrode assembly A: An aluminum-plastic film (thickness: 150 µm) formed through recess-punching was placed in the assembly jig with a recess facing upward, then the electrode assembly A was placed in the recess, with the separator surface facing upward, an 11 mm wide tab adhesive was applied in a region, corresponding to the tab of the electrode assembly A, on an edge of the aluminum-plastic film, and then the partition plate was placed on the electrode assembly A, so that edges were aligned; and external force was applied for tight compression to obtain an assembled semi-finished product. Herein, a distance D1 between an upper edge of the tab adhesive and an upper edge of the packaging shell was 1 mm, shoulder width D2 of the tab adhesive was 3 mm, and thickness D3 of the tab adhesive was 0.2 mm.
(7) Assembling of electrode assembly B: The assembled semi-finished product was placed in the assembly jig with the partition plate facing upward, and then the electrode assembly B with a separator surface facing downward was placed on the partition plate, so that edges were aligned; external force was applied for tight compression; and then the electrode assembly B was covered with another aluminum-plastic film formed through recess-punching with a recess facing downward, an 11 mm wide tab adhesive was applied in a region, corresponding to the tab of the electrode assembly B, on an edge of the aluminum-plastic film, and four sides were heat-sealed through hot pressing, to obtain an assembled electrode assembly. Herein, a distance D1 between an upper edge of the tab adhesive and an upper edge of the packaging shell was 1 mm, shoulder width D2 of the tab adhesive was 3 mm, and thickness D3 of the tab adhesive was 0.2 mm.
(8) Injection and packaging: The electrolyte was separately injected into each cavity of the assembled electrode assembly, and all tabs of the electrode assemblies A and B extended out from an aluminum-plastic film. Herein, width of the overlapping region of the negative tab of the electrode assembly A and the positive tab of the electrode assembly B was 4.75 mm, and width of the tab adhesive overlapping region of the negative tab of the electrode assembly A and the positive tab of the electrode assembly B was 10.67 mm.
(9) Series connection: The negative tab of the electrode assembly A and the positive tab of the electrode assembly B were welded together through laser welding to implement the series connection, thereby finishing battery assembly. Herein, the area S1 of the connecting region was 20 mm², the distance D5 between the two connected tabs was 3 mm, and the distance D6 between the connecting region and the aluminum-plastic film was 5 mm.

### Example 2

This example was the same as Example 1 except that width of the overlapping region of the negative tab of the electrode assembly A and the positive tab of the electrode assembly B was 2.5 mm, and width of the tab adhesive overlapping region of the negative tab of the electrode assembly A and the positive tab of the electrode assembly B was 5.61 mm.

### Example 3

This example was the same as Example 1 except that a distance D1 between an upper edge of the tab adhesive and an upper edge of the packaging shell was 5 mm.

### Example 4

This example was the same as Example 1 except that width of the tab adhesive was 8 mm and shoulder width D2 of the tab adhesive was 1.5 mm.

### Example 5

This example was the same as Example 1 except that thickness D3 of the tab adhesive was 3 mm.

### Example 6

This example was the same as Example 1 except that thickness D4 of the tab was 2 mm.

### Example 7

This example was the same as Example 1 except that width W1 of the tab was 10 mm.

### Example 8

This example was the same as Example 1 except that a distance D5 between the two connected tabs was 6 mm.

### Example 9

This example was the same as Example 1 except that a distance D6 between the connecting region and the aluminum-plastic film was 30 mm.

### Example 10

This example was the same as Example 1 except that thickness of the partition plate was 200 µm.

### Example 11

This example was the same as Example 1 except that width of the overlapping region of the negative tab of the electrode assembly A and the positive tab of the electrode assembly B was 3 mm, and width of the tab adhesive overlapping region of the negative tab of the electrode assembly A and the positive tab of the electrode assembly B was 6.6 mm.

### Example 12

This example was the same as Example 1 except that a distance D5 between the two connected tabs was 1 mm.

### Example 13

This example was the same as Example 1 except that shoulder width D2 of the tab adhesive was 1.5 mm and a distance D6 between the connecting region and the aluminum-plastic film was 3 mm.

### Example 14

This example was the same as Example 1 except that a distance D5 between the two connected tabs was 6 mm and a distance D6 between the connecting region and the aluminum-plastic film was 4 mm.

### Example 15

This example was the same as Example 3 except that an area S1 of a connecting region was 4 mm², rated capacity of an electrode assembly at 0.2C was 10 A, and a maximum discharge rate was 2C. Herein, current carrying capacity per unit area of the connecting region was 5 A/mm².

### Example 16

This example was the same as Example 15 except that an area S1 of a connecting region was 3 mm² and a maximum discharge rate was 3C.

### Example 17

This example was the same as Example 15 except that an area S1 of a connecting region was 10 mm² and rated capacity of an electrode assembly at 0.2C was 50 A.

### Example 18

The electrode assembly C was prepared according to step (4) in Example 1, during packaging of the electrode assembly, the electrode assembly B with a separator surface facing downward was placed on the partition plate, so that edges were aligned; external force was applied for tight compression; the partition plate was disposed on the electrode assembly B, then the electrode assembly C with a separator surface facing downward was placed on the partition plate, so that edges were aligned; external force was applied for tight compression; and then the electrode assembly C was covered with another aluminum-plastic film formed through recess-punching with a recess facing downward, an 11 mm wide tab adhesive was applied in a region, corresponding to the tab of the electrode assembly C, on an edge of the aluminum-plastic film, and four sides were heat-sealed through hot pressing, to obtain an assembled electrode assembly.

All tabs of the electrode assembly C extended out from an aluminum-plastic film, and then the negative tab of the electrode assembly B and the positive tab of the electrode assembly C were welded together through laser welding to implement the series connection, thereby finishing battery assembly.

This example was the same as Example 15 except the foregoing processes.

### Example 19

This example was the same as Example 15 except that positive tabs and negative tabs of the electrode assemblies A and B extended out from the packaging shell along opposite directions separately.

### Example 20

(1) Preparation of negative electrode plate: This example was the same as Example 1 except that a negative electrode plate was cut into a size of 41 mm×550 mm for use.
(2) Preparation of positive electrode plate: This example was the same as Example 1 except that a positive electrode plate was cut into a size of 35 mm×547 mm for use.
(3) Preparation of electrolyte: In an atmosphere of dry argon, first, an organic solvent ethylene carbonate (EC), ethyl methyl carbonate (EMC), and diethyl carbonate (DEC) were mixed in a mass ratio of 30:50:20 (EC:EMC:DEC), and then lithium salt lithium hexafluorophosphate (LiPF₆) was added to the organic solvent for dissolution and mixed uniformly, to obtain an electrolyte with a lithium salt concentration of 1.15 mol/L.
(4) Preparation of electrode assembly A and electrode assembly B: The separator, the negative electrode plate with two-sided coatings, the separator, and the positive electrode plate with two-sided coatings were stacked, and then wound from an end to form the winding electrode assembly. Each electrode assembly included a positive tab and a negative tab, the two tabs were arranged abreast, thickness D4 of the tab was 0.3 mm, width W1 of the tab was 5 mm, and a 15 µm thick polyethylene (PE) film was selected as the separator.
(5) Preparation of partition plate: A material of the packaging layer polypropylene (PP, melting point: 140°C) was uniformly dispersed into a dispersant N-methylpyrrolidone (NMP) to prepare a PP suspension; a spreading machine was used to apply the PP suspension on both sides of a 15 µm thick polyimide (PI) film separately; and then the polyimide film was dried at 130°C to eliminate the dispersant NMP from the suspension, thereby finishing preparation of the partition plate. Herein, thickness of the partition plate was 15 µm.
(6) Assembling of electrode assembly A: An aluminum-plastic film (thickness: 150 µm) formed through recess-punching was placed in the assembly jig with a recess facing upward, then the electrode assembly A was placed in the recess, then the partition plate was placed on the electrode assembly A, and an 11 mm wide tab adhesive was applied in a region, corresponding to the tab of the electrode assembly B, on an edge of the aluminum-plastic film, so that edges were aligned; and external force was applied for tight compression to obtain an assembled semi-finished product. Herein, a distance D1 between an upper edge of the tab adhesive and an upper edge of the packaging shell was 5 mm, shoulder width D2 of the tab adhesive was 3 mm, and thickness D3 of the tab adhesive was 0.2 mm.
(7) Assembling of electrode assembly B: The assembled semi-finished product was placed in the assembly jig with the partition plate facing upward, and then the electrode assembly B was placed on the partition plate, so that edges were aligned; external force was applied for tight compression; and then the electrode assembly B was covered with another aluminum-plastic film formed through recess-punching with a recess facing downward, an 11 mm wide tab adhesive was applied in a region, corresponding to the tab of the electrode assembly B, on an edge of the aluminum-plastic film, and four sides were heat-sealed through hot pressing, to obtain an assembled electrode assembly. Herein, a distance D1 between an upper edge of the tab adhesive and an upper edge of the packaging shell was 5 mm, shoulder width D2 of the tab adhesive was 3 mm, and thickness D3 of the tab adhesive was 0.2 mm.
(8) Injection and packaging: The electrolyte was separately injected into each cavity for assembling the electrode assembly, and all tabs of the electrode assemblies A and B extended out from an aluminum-plastic film. Herein, width of the overlapping region ofthe negative tab of the electrode assembly A and the positive tab of the electrode assembly B was 4.75 mm, and width of the tab adhesive overlapping region of the negative tab of the electrode assembly A and the positive tab of the electrode assembly B was 10.67 mm.
(9) Series connection of electrode assemblies: The negative tab of the electrode assembly A and the positive tab of the electrode assembly B were welded together through laser welding to implement the series connection, thereby finishing battery assembly. Herein, the area S1 of the connecting region was 30 mm², the distance D5 between the two welded tabs was 3 mm, and the distance D6 between the connecting region and the aluminum-plastic film was 5 mm.

### Comparative Example 1

An aluminum-plastic film formed through recess-punching was placed in the assembly jig with a recess facing upward, then the electrode assembly A was placed in the recess, with the separator surface facing upward, and then the electrode assembly B was placed on the electrode assembly A, so that edges were aligned; external force was applied for tight compression; and then the electrode assembly B was covered with another aluminum-plastic film formed through recess-punching with a recess facing downward, and four sides were heat-sealed through hot pressing, to obtain an assembled electrode assembly. Herein, this example was the same as Example 1 except that shoulder width D2 of the tab adhesive was 3 mm, thickness D3 of the tab adhesive was 0.2 mm, a distance D1 between an upper edge of the tab adhesive and an upper edge of the packaging shell was 1 mm, a distance between the two connected tabs was 3 mm, and thickness D4 of the tab was 0.3 mm.

### Comparative Example 2

This example was the same as Example 1 except that width of the overlapping region ofthe negative tab of the electrode assembly A and the positive tab of the electrode assembly B was 1 mm, and width of the tab adhesive overlapping region of the negative tab of the electrode assembly A and the positive tab of the electrode assembly B was 2.31 mm.

### Comparative Example 3

This example was the same as Example 1 except that a distance D5 between the two connected tabs was 1 mm and a distance D6 between the connecting region and the aluminum-plastic film was 1 mm.

### Comparative Example 4

This example was the same as Example 1 except that a distance D5 between the two connected tabs was 6 mm and a distance D6 between the connecting region and the aluminum-plastic film was 3.5 mm.

For data and test results of the examples and comparative examples, refer to Table 1 and Table 2.

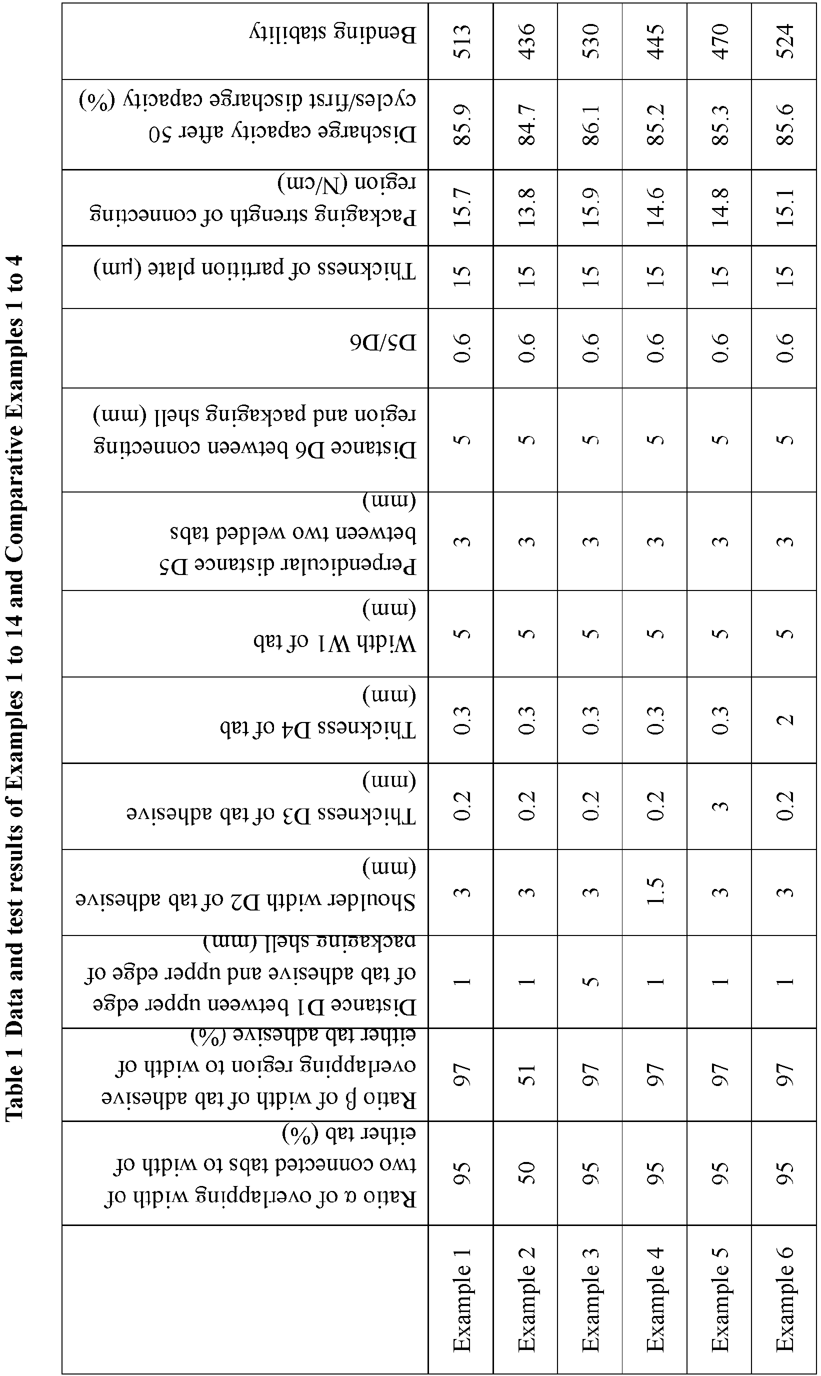

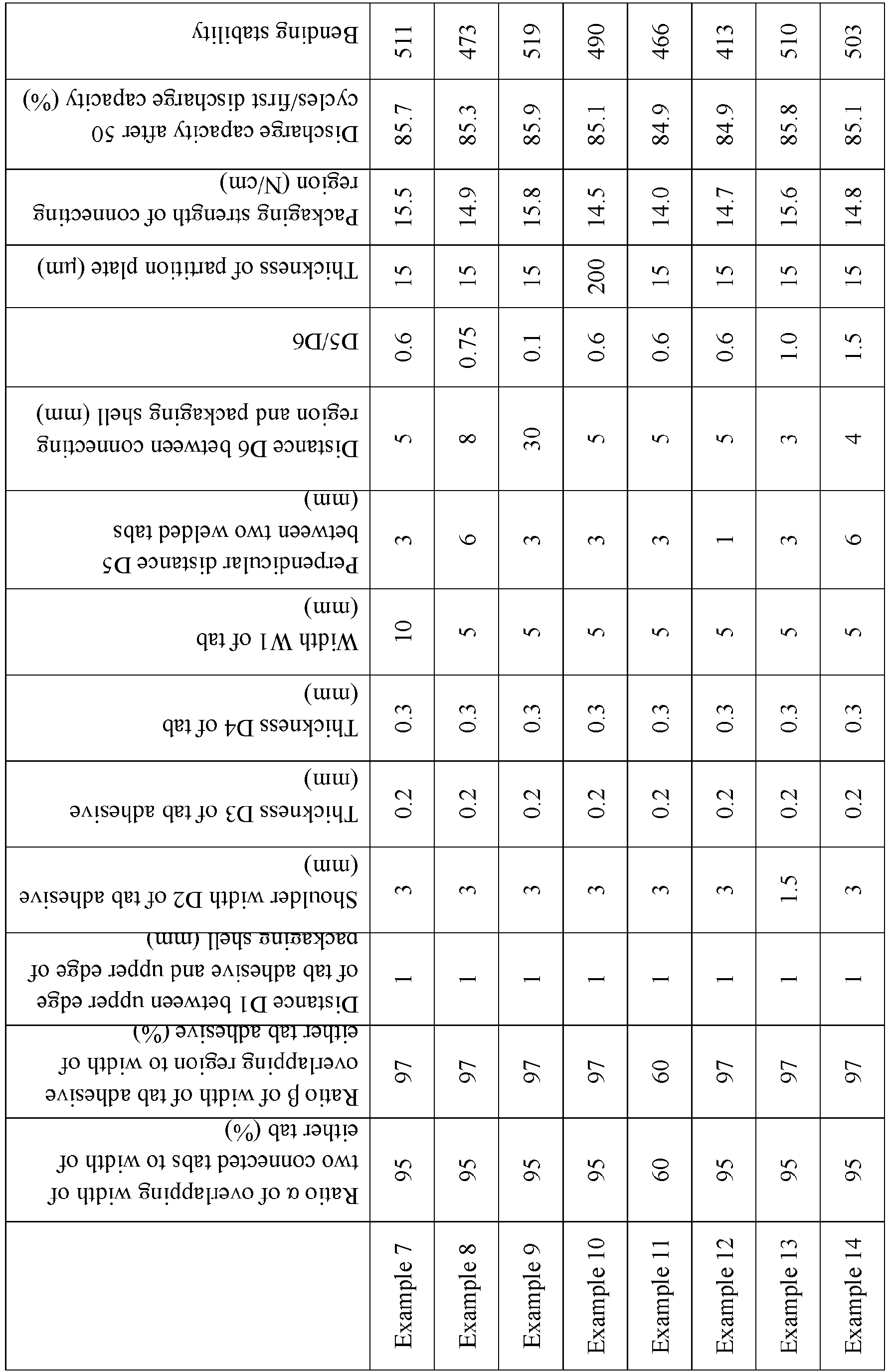

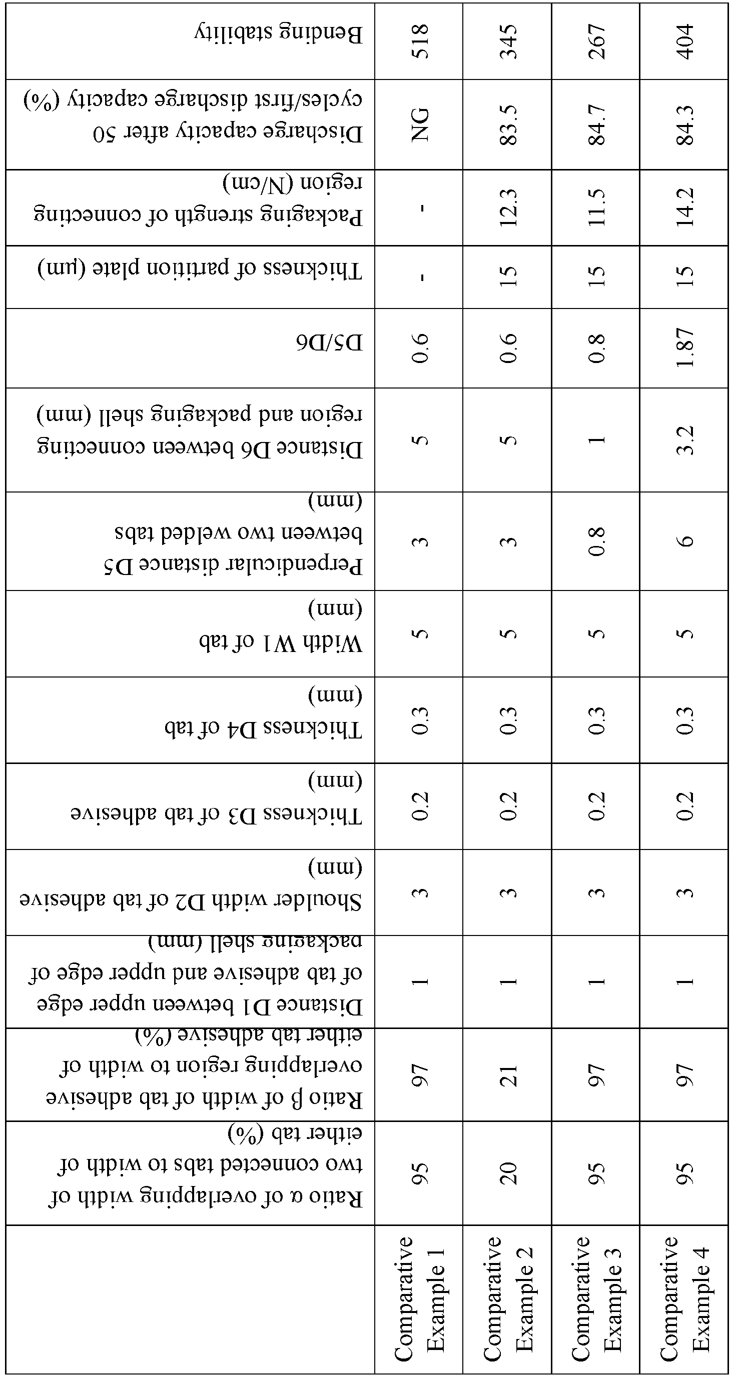

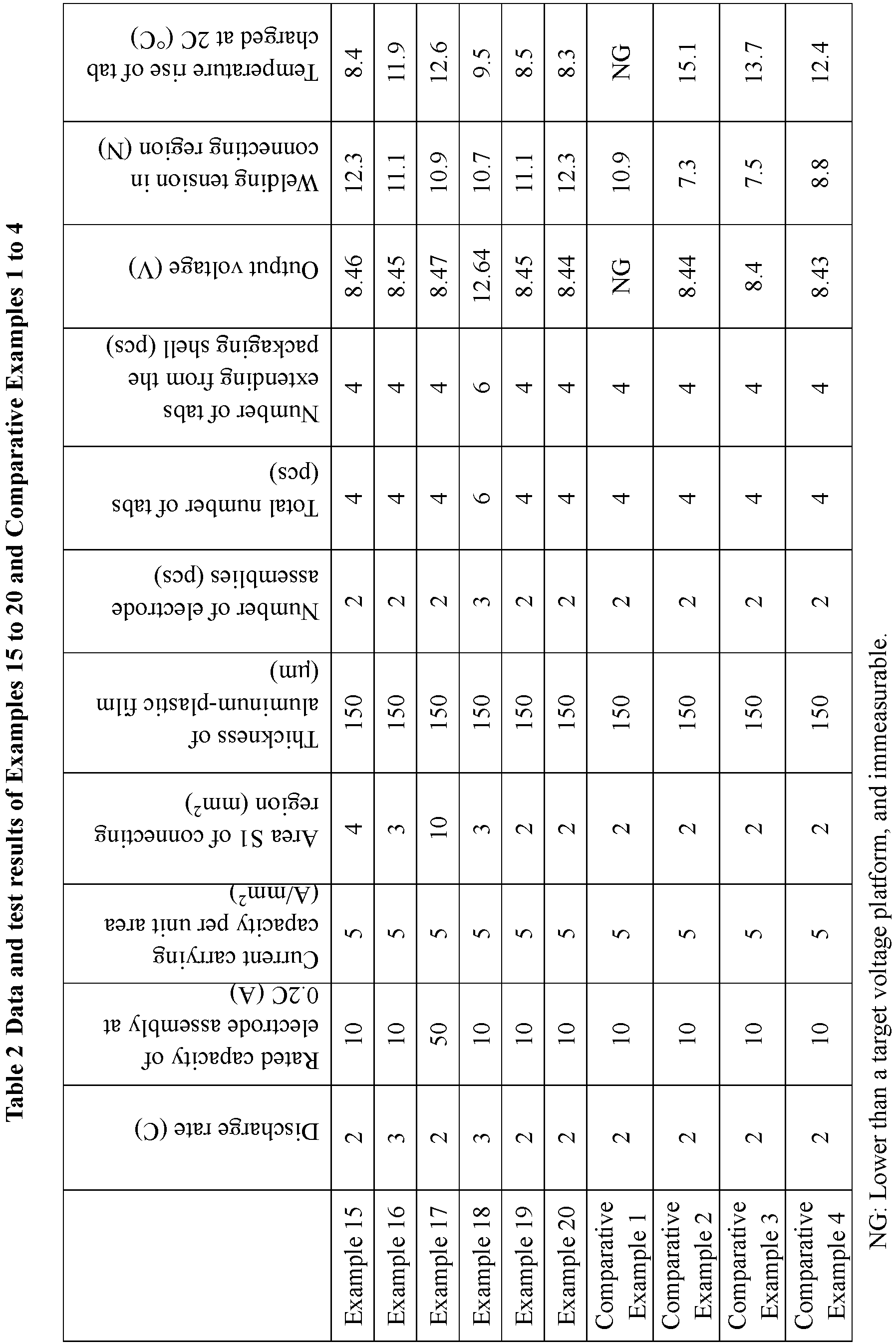

It can be seen from Examples 1 to 14 and Comparative Examples 2 and 3 in Table 1 that as the ratio of the overlapping width of the two connected tabs to the width of either tab and the ratio of the width of the tab adhesive overlapping region to the width of either tab adhesive increases, the bending stability of the electrochemical apparatus in this application is significantly improved.

It can be seen from Examples 1 to 14 and Comparative Example 2 in Table 1 that the packaging strength of the connecting region of the electrochemical apparatus in this application is significantly improved, and the discharge capacity after 50 cycles/first discharge capacity is improved.

It can be seen from Examples 1 to 14 and Comparative Examples 3 and 4 in Table 1 that as long as the value of D6 and the value of D5/D6 fall within the scopes of this application, the bending stability of the electrochemical apparatus in this application is significantly improved.

It can be seen from Examples 1 to 14 and Comparative Example 4 in Table 1 that as long as the ratio of D5/D6 falls within the scope of this application, the bending stability of the electrochemical apparatus is improved, thereby improving use reliability of the electrochemical apparatus.

It can be seen from Examples 15 to 20 and Comparative Examples 2 and 3 in Table 2 that the welding tension in the connecting region of the electrochemical apparatus in this application is significantly improved, the output voltage remains unchanged substantially, and the temperature rise of the tab charged at 2C decreases, which indicate that the electrochemical apparatus in this application has good connecting reliability and use reliability.

It can be seen from Examples 15 to 20 and Comparative Examples 3 and 4 in Table 2 that as long as the ratio of D5/D6 falls within the scope of this application, the welding tension in the welding connecting region of the electrochemical apparatus is significantly improved, and the temperature rise of the tab charged at 2C decreases, thereby improving the use reliability of the electrochemical apparatus.

The ratio α of the overlapping width of the two connected tabs to the width of either tab and the ratio β of the width of the tab adhesive overlapping region to the width of either tab adhesive generally affect packaging strength and bending stability of the electrochemical apparatus; the area S 1 of the connecting region generally affects the connecting strength of the connecting region and the temperature rise of the tab; and designing and adjustment of the relative positions of the two connected tabs generally affects the connecting reliability of the adjacent electrode assemblies and the packaging reliability of the electrochemical apparatus, that is, the distances D1 to D6 are adjusted to achieve the effects. It can be seen from Examples 1 to 20 that as long as the foregoing parameters fall within the scopes of this application, for the obtained electrochemical apparatus, not only the output voltage is increased, but also the connecting reliability and the packaging reliability are increased, and the electrochemical apparatus has excellent industrial applicability.

The foregoing descriptions are merely preferred embodiments of this application, but are not intended to limit this application. Any modification, equivalent replacement, or improvement made without departing from the spirit and principle of this application shall fall within the protection scope of this application.

## Claims

1. An electrochemical apparatus, comprising at least two electrode assemblies and a packaging shell, wherein the electrode assemblies are respectively disposed in independent cavities in the packaging shell;
each electrode assembly comprises two tabs with opposite polarities, wherein at least one tab of one electrode assembly is connected to one of two tabs of the other electrode assembly, and there is a tab overlapping region between orthographic projections of the two connected tabs along a seal thickness direction Z; and
a ratio α of overlapping width O1 of the two connected tabs to width W1 of either of the two connected tabs satisfies 40%<α≤100%, wherein
the overlapping width O1 is overlapping width of the two connected tabs along a seal length direction X at an outer edge of a seal of the packaging shell viewed along the seal thickness direction Z; and
the width W1 of the tab is width of either of the two connected tabs along the seal length direction X at the outer edge of the seal of the packaging shell viewed along the seal thickness direction Z.

2. The electrochemical apparatus according to claim 1, wherein each of the two connected tabs is provided with a tab adhesive, tab adhesive application width of the tab along the seal length direction X at the outer edge of the seal of the packaging shell extends beyond two sides of the tab, and a ratio of shoulder width D2 of the tab adhesive to the width W 1 of the tab is D2/W1≥1/60, wherein
the shoulder width D2 of the tab adhesive is a distance by which a side of the tab adhesive exceeds an edge of the tab on a same side along the direction X at the outer edge of the seal of the packaging shell.

3. The electrochemical apparatus according to claim 2, wherein there is a tab adhesive overlapping region between orthographic projections of the tab adhesives on the two connected tabs along the seal thickness direction Z, and a ratio β of overlapping width O2 of the tab adhesives to width W2 of either of the tab adhesives satisfies 40%<β≤100%, wherein
the overlapping width O2 of the tab adhesives is overlapping width of the tab adhesives along the seal length direction X at the outer edge of the seal of the packaging shell viewed along the seal thickness direction Z; and
the width W2 of the tab adhesive is width of either of the tab adhesives along the seal length direction X at the outer edge of the seal of the packaging shell viewed along the seal thickness direction Z.

4. The electrochemical apparatus according to claim 1, wherein a distance between the two connected tabs at the outer edge of the seal of the packaging shell is D5; and there is a connecting region between the two connected tabs, tab length between the connecting region and the outer edge of the seal of the packaging shell is D6, and a relationship between D5 and D6 satisfies 0<D5/D6≤1.7.

5. The electrochemical apparatus according to claim 4, wherein 3 mm≤D6≤30 mm.

6. The electrochemical apparatus according to claim 4, wherein 0.1 mm<D5<(H1+H2)/2+5 mm, wherein H1 and H2 are respective thickness of the two connecting electrode assemblies.

7. The electrochemical apparatus according to claim 4, wherein an area S1 of the connecting region ranges from 1 mm² to 200 mm².

8. The electrochemical apparatus according to claim 1, wherein in a direction leaving the electrode assembly, a distance D1 by which the tab adhesive exceeds an upper edge of the packaging shell along a seal width direction Y satisfies 0.2 mm≤D1≤5 mm, thickness of the tab adhesive satisfies 0.1 mm≤D3≤3 mm, and thickness of the tab satisfies 0.2 mm≤D4≤5 mm.

9. The electrochemical apparatus according to claim 1, wherein 50%≤α≤100%.

10. The electrochemical apparatus according to claim 1, wherein the two connected tabs are two tabs with opposite polarities.

11. The electrochemical apparatus according to claim 1, wherein the electrode assembly has tabs protruding from the packaging shell in different directions.

12. The electrochemical apparatus according to claim 1, further comprising a partition plate sandwiched between electrode assemblies, wherein thickness of the partition plate ranges from 2 µm to 100 µm.

13. The electrochemical apparatus according to claim 1, wherein a structure of the electrode assembly comprises at least one of a winding structure and a stacked structure.

14. The electrochemical apparatus according to claim 1, wherein the packaging shell comprises at least one of an aluminum-plastic film, an aluminum shell, a steel shell, or a plastic shell.

15. An electronic apparatus, comprising the electrochemical apparatus according to any one of claims 1 to 14.
